# EUROPÄISCHE PATENTSCHRIFT

(11) **EP 3 590 640 B1**
(45) Veröffentlichungstag und Bekanntmachung des Hinweises auf die Patenterteilung: **29.03.2023**
(21) Anmeldenummer: 19184362.2
(22) Anmeldetag: 04.07.2019
(51) Int. Cl.: B23B 31/20, B24B 41/06

(54) **SPANNVORRICHTUNG, WERKZEUGMASCHINE SOWIE VERFAHREN ZUM ZWEISTUFIGEN SPANNEN EINES WERKSTÜCKS**
TENSIONING DEVICE, MACHINE TOOL AND METHOD FOR TWO-LEVEL TENSIONING OF A WORKPIECE
DISPOSITIF DE SERRAGE, MACHINE-OUTIL AINSI QUE PROCÉDÉ DE SERRAGE À DEUX ÉTAGES D'UNE PIÈCE À USINER

(30) Priorität: 04.07.2018 DE 102018116229
(43) Veröffentlichungstag der Anmeldung: 08.01.2020
(73) Patentinhaber: Sterman Technische Systeme GmbH, 78112 St. Georgen (DE)
(72) Erfinder: Zinapold, Mike, 78147 Vöhrenbach (DE)
(74) Vertreter: Westphal, Mussgnug & Partner Patentanwälte mbB

(56) Entgegenhaltungen:
- WO-A1-01/52764
- DE-A1- 3 233 868
- DE-A1- 19 961 451
- GB-A- 1 035 197
- GB-A- 1 123 469
- GB-A- 1 375 699
- US-A- 1 413 680
- US-A- 2 747 881

## Beschreibung

Die vorliegende Erfindung betrifft eine Spannvorrichtung zum mindestens zweistufigen Spannen eines Werkstücks gemäß Patentanspruch 1, sowie eine Werkzeugmaschine mit einer Spannvorrichtung gemäß Patentanspruch 18, sowie ein Verfahren zum mindestens zweistufigen Spannen eines Werkstücks mit den Merkmalen des Patentanspruchs 19, durch welches eine besonders hohe Fertigungsgüte des in der Spannvorrichtung gespannten Werkstücks möglich ist.

Spannvorrichtungen sind aus dem Stand der Technik in unterschiedlichen Ausgestaltungen bekannt und umfassen typischerweise einen Werkstückaufnahmebereich, sowie wenigstens einen Spannkörper, durch den das Werkstück in dem Werkstückaufnahmebereich zur Bearbeitung gespannt gehalten werden kann. Nach dem Verspannen des Werkstücks auf der Spannvorrichtung kann das Werkstück durch eine Werkzeugmaschine, beispielsweise eine Drehmaschine, eine Schleifmaschine oder dergleichen bearbeitet werden. Im industriellen Einsatz von Spannvorrichtungen stellt das Ausrichten des Werkstücks in dem Werkstückaufnahmebereich der Spannvorrichtung eine große Herausforderung dar, da zur präzisen Bearbeitung des Werkstücks dieses in einer möglichst koaxialen Stellung zu einer Längsachse auf der Spannvorrichtung gehalten werden soll. Darüber hinaus sollen zusätzliche Spannungen in dem Werkstück durch das Spannen vermieden und bei der Bearbeitung des Werkstücks entstehende frei werdende Spannungen möglichst gut kompensiert werden. Zwischen den unterschiedlichen Bearbeitungsvorgängen, beispielsweise Schruppen und Schlichten, werden einerseits unterschiedliche Werkzeuge verwendet und andererseits aufgrund von unterschiedlich hohen Spannkräften Spannungen in dem Werkstück erzeugt. Diese Spannungen, aber auch freiwerdende Eigenspannungen können in dem Werkstück einen komplexen Spannungszustand erzeugen, welcher zu unerwünschten Verformungen, insbesondere im ausgespannten Zustand des Werkstücks aus dem Spannfutter, führen kann.

In dem Stand der Technik werden Werkstücke oftmals in einer Spannung in der Spannvorrichtung geschruppt und geschlichtet. Nach dem Ausspannen des Werkstücks aus der Spannvorrichtung können Spannungen in dem Werkstück zu ungewollten Verformungen führen. Daher ist es häufig notwendig, bei der Herstellung von hochpräzisen Werkstücken die entsprechenden Flächen durch einen zusätzlichen Bearbeitungsschritt zu erzeugen. Alternativ hierzu werden im Stand der Technik die Werkstücke zwischen zwei Bearbeitungsschritten, beispielsweise dem Schruppen und dem Schlichten, umgespannt. Eingebrachte und frei gewordene Spannungen können nach dem Ausspannen ungestört freiwerden und die daraus resultierenden Verformungen werden in dem darauffolgenden Bearbeitungsschritt beseitigt. Eine derartige Verfahrensweise ist jedoch zeitintensiv und unwirtschaftlich, da das Werkstück erneut in dem Spannfutter ausgerichtet werden muss.

Aus der GB 1 375 699 ist eine Spannvorrichtung bekannt, welche die Merkmale des Oberbegriffs des Anspruchs 1 aufweist.

Es ist daher die Aufgabe der vorliegenden Erfindung, ein Spannfutter der oben genannten Gattung bereitzustellen, dass ein mehrstufiges Spannen eines Werkstückes ermöglicht, ohne dass das Werkstück aus der Spannvorrichtung entnommen werden muss. Die Spannvorrichtung soll ermöglichen, dass frei werdende Spannungen, welche im ungespannten Zustand des Werkstücks zu einer Verformung führen können, durch einen Wechsel der Spannstufe freigegeben werden und durch die Spannvorrichtung aufgenommen werden können. Auch soll die Spannvorrichtung ermöglichen Rundheitsfehler auszugleichen um kleinstmögliche Toleranzen fertigen zu können Weiterhin soll die Spannvorrichtung eine besonders zeiteffiziente Fertigung mit kurzen Stand- und Taktzeiten ermöglichen und ein Höchstmaß an Präzision an den zu bearbeitenden Werkstücken gewährleisten.

Die Lösung dieser Aufgaben erfolgt durch eine Spannvorrichtung mit den Merkmalen des Patentanspruchs 1, sowie einer Werkzeugmaschine mit den Merkmalen des Patentanspruchs 18 und durch ein Verfahren zum mindestens zweistufigen Spannen eines Werkstücks mit den Merkmalen des Patentanspruchs 19.

Vorteilhafte Weiterbildungen der Erfindung sind Bestandteil der Unteransprüche.

Die erfindungsgemäße Spannvorrichtung zum mindestens zweistufigen Spannen eines Werkstücks weist eine Längsachse, eine erste Seite, eine zweite Seite sowie einen Werkstückaufnahmebereich auf, der im Bereich der zweiten Seite angeordnet ist. Die Längsachse ist typischerweise koaxial zu einer Spindelachse einer Werkzeugmaschine ausgerichtet, die das Spannfutter antreibt. Darüber hinaus umfasst die erfindungsgemäße Spannvorrichtung einen elastischen Spannkörper mit wenigstens einem Spannelement, eine erste Spanneinheit und mindestens eine zweite Spanneinheit, wobei die erste Spanneinheit und die mindestens eine zweite Spanneinheit entlang der Längsachse zwischen einer Spannstellung und einer Grundstellung zustellbar sind, wobei der Spannkörper auf der dem Werkstückaufnahmebereich zugewandten Seite angeordnet ist und zwischen dem Spannkörper und der mindestens einen zweiten Spanneinheit die erste Spanneinheit angeordnet ist, und wobei zwischen dem Spannkörper und der ersten Spanneinheit und der ersten Spanneinheit und der mindestens einen zweiten Spanneinheit jeweils wenigstens eine Keilfläche angeordnet ist, die in der Spannstellung durch jeweils einen Wirkkontakt eine Spannkraft auf das wenigstens eine Spannelement aufbringt. Der elastische Spannkörper der Spannvorrichtung wird durch das Zustellen der ersten Spanneinheit und der mindestens einen zweiten Spanneinheit und dem Zusammenwirken der Keilfläche elastisch verformt, wodurch das wenigstens eine Spannelement des elastischen Spannkörpers in Richtung des Werkstückaufnahmebereichs elastisch verschoben wird und ein Werkstück, dass sich im Werkstückaufnahmebereich befindet, wird verspannt. Durch das Zustellen der ersten Spanneinheit oder durch das Zustellen der ersten Spanneinheit und der mindestens einen zweiten Spanneinheit aus der Grundstellung in die Spannstellung wirken die jeweiligen Keilflächen der Spanneinheiten zusammen und erzeugen durch einen Wirkkontakt die Spannkraft. Eine erste Spannstufe ist dadurch realisiert, dass sich die erste Spanneinheit und die wenigstens eine zweite Spanneinheit in der Spannstellung befinden. In der zweiten Spannstufe befindet sich die erste Spanneinheit in der Spannstellung und die mindestens eine zweite Spanneinheit steht in der Grundstellung, wodurch in der zweiten Spannstufe eine weichere Spannung des Werkstücks in der Spannvorrichtung erreicht ist.

Weiterhin ist es besonders vorteilhaft, wenn der Spannkörper, die erste Spanneinheit und die mindestens eine zweite Spanneinheit koaxial zu der Längsachse ausgerichtet sind. Durch die koaxiale Anordnung ergibt sich in der Spannvorrichtung bei dem Zustellen der ersten Spanneinheit und der mindestens einen zweiten Spanneinheit ein über den Umfang gleichmäßiger Krafteintrag auf das Werkstück, wodurch die Spannkraft symmetrisch um die Längsachse der Spannvorrichtung aufgebaut wird. Gemäß einer weiteren vorteilhaften Ausgestaltung der vorliegenden Erfindung ist vorgesehen, dass der Spannkörper auf der dem Werkstückaufnahmebereich zugewandten Seite mindestens eine Spannfläche aufweist. Weiterhin ist dabei besonders bevorzugt, wenn die Spannfläche aus einer in den Werkstückaufnahmebereich ragenden Anformung gebildet ist und wenn die Anformung keil- oder kuppelförmig ausgebildet ist. Durch die keil- oder kuppelförmige Anformung kann das Werkstück in der Längsachse möglichst punktuell eingespannt werden, wodurch komplexe Spannungszustände, insbesondere in der Längsachse, vermieden werden können. Auch ermöglicht eine keilförmige Ausgestaltung der Anformung, dass die Anformung mögliche Oberflächenschichten, beispielsweise Oxidationsschichten von Schmiedeteilen, durchdringt und somit das Werkstück besonders sicher in der Spannvorrichtung fixiert.

Auch ist es vorteilhaft, wenn der Spannkörper über den Umfang verteilt mindestens zwei Axialschlitze aufweist, wodurch zwischen zwei Axialschlitzen jeweils ein Spannelement gebildet ist, das in der Längsachse absteht. Die Axialschlitze erstrecken sich entlang der Längsachse und durchdringen den Spannkörper zur Bildung der Spannelemente vollständig, so dass die Axialschlitze in dem Spannkörper innerhalb der elastischen Materialgrenzen eine große Zustellbewegung der jeweiligen Spannelemente ermöglichen, wodurch der Einsatzbereich einer solchen Spannvorrichtung im Hinblick auf unterschiedliche Durchmesser oder Formtoleranzen der Werkstücke vergrößert ist.

Des Weiteren ist es vorteilhaft, wenn die zwei Axialschlitze zwischen der ersten Seite und der zweiten Seite angeordnet sind. Insbesondere ist es allerdings bevorzugt, wenn die Axialschlitze im Bereich der zweiten Seite angeordnet sind und auf der zweiten Seite des Spannkörpers ein offenes Ende aufweisen. Beim Zustellen der ersten Spanneinheit oder beim Zustellen der ersten Spanneinheit und der mindestens einen zweiten Spanneinheit werden die Spannelemente durch den Wirkkontakt der Keilflächen innerhalb der elastischen Materialgrenzen des Spannkörpers verbogen, wodurch die Spannflächen der Spannelemente eine Schwenkbewegung zum Spannen des Werkstücks in Richtung des Werkstückaufnahmebereichs vornehmen. Die Schwenkbewegung umfasst eine radiale Zustellbewegung, die von einer axialen Zustellbewegung überlagert wird, wodurch ein Axialanzug gegen einen Werkstückanschlag realisiert werden kann.

Weiterhin vorteilhaft sind die mindestens zwei Axialschlitze mit Entlastungsbohrungen versehen, durch die die Kerbwirkung an den Enden der mindestens zwei Axialschlitze reduziert ist.

Es hat sich als vorteilhaft erwiesen, wenn der Spannkörper auf der von dem Werkstückaufnahmebereich abgewandten Seite eine Keilfläche aufweist, die eingerichtet ist, mit der ersten Spanneinheit zusammenzuwirken. Die Keilfläche erstreckt sich bevorzugt mit einer konstanten Steigung zwischen einem ersten Radius R1 und einem zweiten Radius R2, wobei der erste Radius R1 kleiner ist als der zweite Radius R2.

Es ist vorteilhaft, wenn die erste Spanneinheit zwischen der ersten Seite und der zweiten Seite, vorzugsweise im Bereich des zweiten Endes der Spannvorrichtung, einen konischen Bereich aufweist. Der konische Bereich umfasst eine erste Keilfläche, die eingerichtet ist mit der Keilfläche des Spannkörpers in der Spannstellung zusammenzuwirken und eine zweite Keilfläche, welche eingerichtet ist, in der Spannstellung mit der zweiten Spanneinheit zusammenzuwirken. Die erste Keilfläche weist einen ersten Radius R3 und einen zweiten Radius R4 auf, wobei der Radius R3 kleiner ist als der Radius R4. Darüber hinaus ist der Radius R3 kleiner als der Radius R2 der Keilfläche des Spannkörpers. Die zweite Keilfläche weist ebenfalls einen ersten Radius R5 und einen zweiten Radius R6 auf, wobei der Radius R5 kleiner ist als der Radius R6. Bevorzugt ist die Steigung zwischen dem ersten Radius R3 und dem zweiten Radius R4 sowie zwischen dem ersten Radius R5 und dem zweiten Radius R6 an der jeweiligen Keilfläche konstant.

Darüber hinaus ist es vorteilhaft, wenn die mindestens eine zweite Spanneinheit eine Keilfläche aufweist, die auf der der ersten Spanneinheit zugewandten Seite angeordnet ist, und die eingerichtet ist, in der Spannstellung der zweiten Spanneinheit mit der äußeren Keilfläche der ersten Spanneinheit zusammenzuwirken. Die Keilfläche der mindestens einen zweiten Spanneinheit umfasst einen ersten Radius R7 und einen zweiten Radius R8, wobei sich die Keilfläche zwischen dem ersten Radius R7 und dem zweiten Radius R8 vorzugsweise mit einer konstanten Steigung erstreckt und der erste Radius R7 kleiner ist als der zweite Radius R8 und der erste Radius R7 der zweiten Spanneinheit kleiner ist als der Radius R6 der ersten Spanneinheit.

Gemäß einer weiteren besonders vorteilhaften Ausgestaltung der vorliegenden Erfindung sind die Keilflächen in der Spannstellung der jeweiligen Spanneinheit in einer Ebene mit dem wenigstens einen Spannelement. Besonders bevorzugt ist, wenn die Keilflächen in der Spannstellung in einer Ebene mit der wenigstens einen Spannfläche liegen. Noch weiter bevorzugt ist, wenn die Anformung des Spannelements in der Spannstellung mit den Keilflächen in einer Ebene liegt, wodurch ein besonders günstiger Spannungsverlauf in der Spannstellung der Spanneinheit realisiert ist.

Es hat sich als vorteilhaft erwiesen, wenn die Spannkraft im Wesentlichen senkrecht zu der Längsachse ausgerichtet ist, wodurch Querkräfte und zusätzliche Spannungszustände in dem Werkstück durch die Spannvorrichtung reduziert werden.

Vorteilhaft ist ebenfalls, wenn die jeweilige Keilfläche in einem Winkel zwischen 60°> α >0° zu der Längsachse angeordnet ist. Dabei weisen die zueinander gerichteten und in Wirkkontakt kommenden Keilflächen zwischen dem Spannkörper und der ersten Spanneinheit sowie zwischen der ersten Spanneinheit und der zweiten Spanneinheit korrespondierende Winkel α auf. Es ist somit möglich, dass beispielsweise die Keilflächen zwischen dem Spannkörper und der ersten Spanneinheit und die Keilflächen zwischen der ersten Spanneinheit und der wenigstens einen zweiten Spanneinheit unterschiedliche Öffnungswinkel aufweisen.

Weiterhin ist es besonders vorteilhaft, wenn der Spannkörper, die erste Spanneinheit und die wenigstens eine zweite Spanneinheit einen korrespondierenden Querschnitt aufweisen, und der jeweilige Querschnitt kreisförmig, mehreckig, elliptisch oder dergleichen ist. Besonders bevorzugt sind aufgrund günstiger Spannungsverläufe kreisrunde Querschnitte, wodurch der Spannkörper, die erste Spanneinheit und die zweite Spanneinheit bevorzugt hülsenförmig ausgebildet sind.

Eine weitere vorteilhafte Ausgestaltung der vorliegenden Erfindung sieht vor, dass die Spannvorrichtung für eine Außenspannung eines Werkstücks ausgebildet ist und/oder dass die Spannvorrichtung für eine Innenspannung des Werkstücks ausgebildet ist. Bei einer Spannvorrichtung für die Außenspannung eines Werkstücks umgreift die Spannvorrichtung das Werkstück zumindest bereichsweise, so dass ein ringförmiges Werkstück auf mindestens einer der Planflächen sowie seiner inneren Mantelfläche bearbeitet werden kann. Es ist auch bevorzugt, wenn die Spannvorrichtung das Werkstück derart umgreift, dass das ringförmige Werkstück auf beiden Planflächen sowie auf der inneren Mantelfläche bearbeitet werden kann.

Eine bevorzugte Ausgestaltung der Spannvorrichtung als Spanndorn für eine Innenspannung eines Werkstücks sieht vor, dass die Spannvorrichtung das ringförmige Werkstück derart hält, dass mindestens eine der beiden Planflächen, besonders bevorzugt beide Planflächen des Werkstücks sowie die äußere Mantelfläche bearbeitet werden können. Besonders bevorzugt ist, wenn die Keilflächen wenigstens eines Spannkörpers als Kegel ausgebildet sind, wodurch der Kegel durch ein Überführen zwischen einer Spannstellung und einer Grundstellung die als ein Spanndorn ausgebildete Spannvorrichtung betätigen kann.

Es hat sich auch als vorteilhaft erwiesen, wenn die erste Spanneinheit und die wenigstens eine zweite Spanneinheit elektrohydraulisch, hydraulisch, pneumatisch oder elektrisch betätigbar sind. In einer besonders bevorzugten Ausgestaltung weist die Spannvorrichtung Kopplungsmittel auf, die eingerichtet sind, beispielsweise mit Zugstangen einer Werkzeugmaschine zur Betätigung der Spanneinheit gekoppelt zu werden.

Die mindestens eine zweite Spanneinheit kann in einer vorteilhaften und erfindungsgemäßen Ausgestaltung eine größere Steifigkeit aufweisen als die erste Spanneinheit. Eine geringere Steifigkeit der ersten Spanneinheit lässt in der zweiten Spannstufe geringfügige Verformungen zum Abbau von Eigenspannungen in dem Werkstück zu und begünstigt eine erhebliche Reduzierung möglicher Formfehler. In dem in der zweiten Spannstufe durchgeführten Fertigungsverfahren können diese Verformungen und Formfehler beseitigt werden, wodurch ein Höchstmaß an Präzision an den zu bearbeitenden Oberflächen realisiert wird. In der zweiten Spannstufe erfolgt besonders bevorzugt die Endbearbeitung der gewünschten Oberflächen, beispielsweise durch Schlichten.

Ein weiterer Aspekt der vorliegenden Erfindung betrifft eine Werkzeugmaschine mit einer erfindungsgemäßen Spannvorrichtung. Besonders bevorzugt ist dabei, wenn die Werkzeugmaschine Mittel zum Betätigen der ersten Spanneinheit und der wenigstens einen zweiten Spanneinheit umfasst. Noch weiter bevorzugt ist die Werkzeugmaschine eine Drehmaschine oder eine Schleifmaschine.

Des Letzteren betrifft die vorliegende Erfindung ein Verfahren zum mindestens zweistufigen Spannen eines Werkstücks mit einer erfindungsgemäßen Spannvorrichtung, wobei das erfindungsgemäße Verfahren durch folgende Verfahrensschritte gekennzeichnet ist:
- Einsetzen des Werkstücks in den Werkstückaufnahmebereich,
- Verspannen des Werkstücks durch ein Verstellen der ersten Spanneinheit und der mindestens einen zweiten Spanneinheit aus der Grundstellung in die Spannstellung,
- Bearbeiten des Werkstücks, insbesondere grobe Vorbearbeitung des Werkstücks, beispielsweise durch Schruppen,
- Verstellen der mindestens einen zweiten Spanneinheit aus der Spannstellung in die Grundstellung,
- Bearbeiten des Werkstücks, insbesondere Feinbearbeitung, beispielsweise Schlichten, und
- Ausspannen des Werkstücks durch ein Verstellen der ersten Spanneinheit aus der Spannstellung in die Grundstellung, wodurch das Werkstück aus der Spannvorrichtung entnommen werden kann.

Nachfolgend werden unter Bezugnahme auf die begleitenden Zeichnungen zwei erfindungsgemäße Ausführungsbeispiele der vorliegenden Erfindung im Detail erläutert. Es zeigen:
- Figur 1: eine schematische und geschnittene Darstellung eines ersten erfindungsgemäßen Ausführungsbeispiels einer Spannvorrichtung zum mindestens zweistufigen Spannen eines Werkstücks in einer Außenspannung, mit einem Spannkörper, einer ersten Spanneinheit und einer zweiten Spanneinheit, die jeweils in einer Längsachse aus einer Grundstellung in eine Spannstellung zugestellt werden können,
- Figur 2a: eine vergrößerte Darstellung der erfindungsgemäßen Spannvorrichtung, wobei die erste Spanneinheit und die zweite Spanneinheit in der Grundstellung stehen,
- Figur 2b: eine vergrößerte Darstellung gemäß Figur 2a, wobei die erste Spanneinheit und die zweite Spanneinheit in der Spannstellung stehen und ein Werkstück in einer ersten Spannstufe spannen, und
- Figur 2c: eine größere Darstellung gemäß den Figuren 2a und 2b, wobei das Werkstück in der zweiten Spannstufe gespannt gehalten wird.

Nachfolgend wird unter Bezugnahme auf die begleitenden Figuren eine zweistufige Spannvorrichtung 1 gemäß einer erfindungsgemäßen Ausführungsform beschrieben, wobei die dargestellte Ausführungsform der Spannvorrichtung 1 für die Außenspannung eines Werkstücks 3 vorgesehen ist. Das Werkstück 3 ist in dem dargestellten Ausführungsbeispiel jeweils ein ringförmiges Werkstück 3 mit zwei Planflächen , einer inneren Mantelfläche und einer äußeren Mantelfläche .

Die zweistufige Spannvorrichtung 1 weist eine erste Spannstufe und eine zweite Spannstufe auf, wobei die erste Spannstufe der starren Spannung des Werkstücks 3 dient und eine maximale Spannkraft zur Vorbearbeitung des Werkstücks 3 bereitstellt, währenddessen die zweite Spannstufe eine weiche Spannung für das Werkstück 3 zur Feinbearbeitung/Endbearbeitung ermöglichen soll.

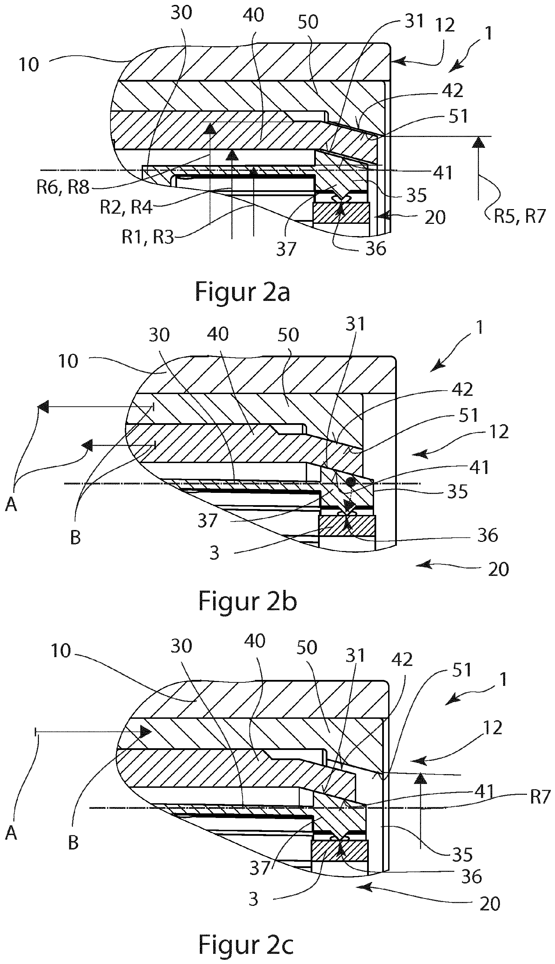

Das in den Figuren 2a bis 2c dargestellte Funktionsprinzip der erfindungsgemäßen Spannvorrichtung 1 dient der Erläuterung der Spannvorrichtung 1 für die Außenspannung des Werkstücks 3. Das Funktionsprinzip kann jedoch ebenso in analoger Anwendung zum Verständnis der Spannvorrichtung 1 für die Innenspannung eines Werkstücks 3 beitragen.

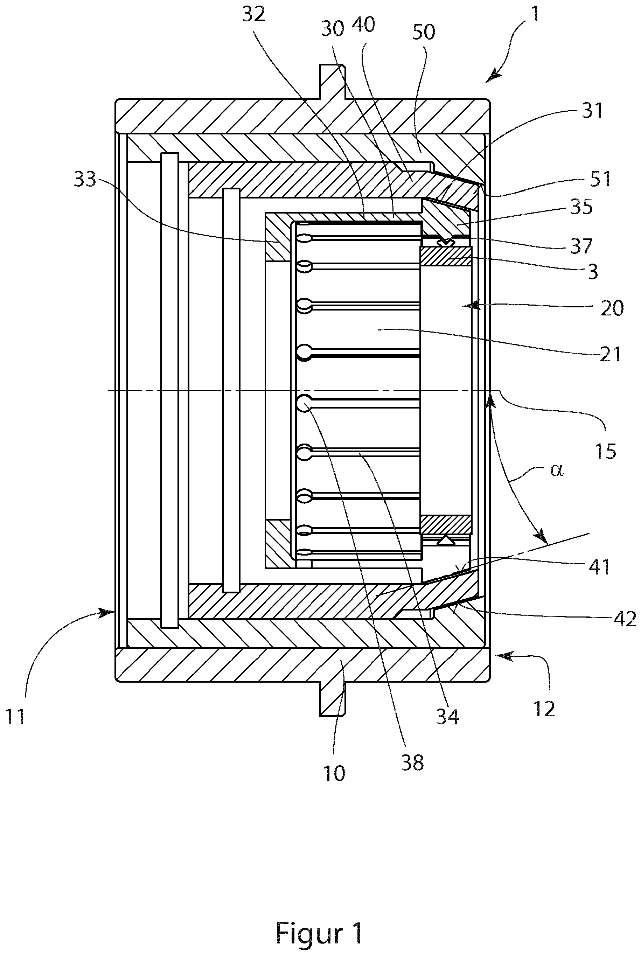

Figur 1 zeigt die Spannvorrichtung 1, die entlang einer Längsachse 15 angeordnet ist und eine erste Seite 11 und eine zweite Seite 12 aufweist. Die Spannvorrichtung umfasst weiterhin einen Grundkörper 10. Die erste Seite 11 ist einer (nicht dargestellten) Werkzeugmaschine 2 zugewandt und weist (nicht dargestellte) Kopplungsmittel auf, durch die die Spannvorrichtung 1 bzw. der Grundkörper 10 mit der Werkzeugmaschine 2 gekoppelt werden kann. Die Werkzeugmaschine 2 umfasst darüber hinaus mindestens eine (nicht dargestellte) Spindel, durch welche die Spannvorrichtung 1 zur Bearbeitung des Werkstücks 3 in eine Rotationsbewegung um die Längsachse 15 versetzt werden kann. Die Rotationsachse der Spindel ist koaxial zu der Längsachse 15 ausgerichtet.

Im Bereich der zweiten Seite 12 ist ein Werkstückaufnahmebereich 20 angeordnet. Der Werkstückaufnahmebereich 20 wird von einem im Wesentlichen um die Längsachse 15 rotationssymmetrischen Spannkörper 30 umgriffen, der eine zylindrische Ausnehmung 21 aufweist, die den Werkstückaufnahmebereich 20 bildet.

Der Spannkörper 30 ist aus einem elastischen Werkstoff, vorzugsweise einem Metall, hergestellt und ist auf der der ersten Seite 11 zugewandten Seite fest mit dem Grundkörper 10 verbunden. Im Bereich der zweiten Seite 12 ist an dem Spannkörper 30 ein Spannelement 35 angeordnet, das auf der dem Werkstückaufnahmebereich 20 zugewandten Seite eine Spannfläche 36 aufweist. Die Spannfläche 36 ist eingerichtet, eine durch das Spannelement 35 aufgebrachte Spannkraft in das Werkstück 3 einzuleiten.

Im Bereich der zweiten Seite 12 der Spannvorrichtung 1 kann - wie dargestellt - der Spannkörper 30 symmetrisch mehrere über den Umfang verteilte Axialschlitze 34 aufweisen. Zwischen jeweils zwei benachbarten Axialschlitzen 34 ist ein Spannelement 35 gebildet, das fingerförmig in der Längsachse 15 absteht und jeweils auf der dem Werkstückaufnahmebereich 20 zugewandten Seite eine Spannfläche 36 aufweist.

Die Axialschlitze 34 weisen auf der zweiten Seite 12 ein offenes Ende auf. Weiterhin können auf dem dem offenen Ende gegenüberliegenden Ende der Axialschlitze 34 in dem Spannkörper 30 Entlastungsbohrungen 38 angeordnet sein, die als lokale Aufweitungen der Axialschlitze 34 (im Umfang) eine Kerbwirkung der Axialschlitze 34 reduzieren. Die Entlastungsbohrungen 38 können beispielsweise eine kreisrunde oder elliptische Form aufweisen.

Die Spannfläche 36 ist aus einer keil- oder kuppelförmigen Anformung 37 gebildet, die eingerichtet ist, eine möglichst punktuelle Einspannung des Werkstücks 3 in dem Werkstückaufnahmebereich 20 zu bewerkstelligen. In dem dargestellten Ausführungsbeispiel ist die Anformung 37 keilförmig.

Die Anformung 37 kann einstückig mit dem Spannkörper 30 hergestellt sein oder auf der dem Werkstückaufnahmebereich 20 zugewandten Seite form- oder stoffschlüssig an dem Spannkörper 30, insbesondere mittels einer Schraubverbindung, wechselbar befestigt sein. Bevorzugt ist die keilförmige Anformung 37 aus einem hartmetallischen oder gehärteten Werkstoff hergestellt und stoffschlüssig, beispielsweise durch Löten, oder Hartlöten an dem Spannkörper 30 befestigt.

Der Spannkörper 30 weist einen mittleren Bereich 32 auf, der zwischen dem Spannelement 35 und einem endseitigen Bereich 33 angeordnet ist. Der Spannkörper 30 ist an dem Grundkörper 10 mit dem einseitigen Bereich 33 fest verbunden. Der mittlere Bereich 32 weist gegenüber dem Spannelement 35 und dem endseitigen Bereich 33 eine geringere Wandstärke in radialer Richtung auf, wodurch die Steifigkeit des Spannkörpers 30 im mittleren Bereich 32 reduziert ist und eine elastische Verformung insbesondere ein Verschwenken bzw. eine Bogenbewegung des Spannelements 35 mit geringem Kraftaufwand begünstigt ist.

Auf der von dem Werkstückaufnahmebereich 20 abgewandten Seite des Spannkörpers 30 ist eine Keilfläche 31 angeordnet, welche in der Längsachse 15 in einer Ebene mit dem Spannelement 35 bzw. der Anformung 37 angeordnet ist. Die Keilfläche 31 weist einen ersten Radius R1 und einen zweiten Radius R2 auf, wobei der Radius R1 die Keilfläche 31 einenends und der Radius R2 die Keilfläche 31 anderenends begrenzt und der erste Radius R1 kleiner ist als der zweite Radius R2, siehe auch Figur 2a.

Wie weiter in Figur 1 dargestellt ist, sind auf der von dem Werkstückaufnahmebereich 20 abgewandten Seite des Spannkörpers 30 eine erste Spanneinheit 40 und eine zweite Spanneinheit 50 angeordnet, wobei die erste Spanneinheit 40 zwischen dem Spannkörper 30 und der zweiten Spanneinheit 50 angeordnet ist. Die erste Spanneinheit 40 und die zweite Spanneinheit 50 sind auf der von dem Werkstückaufnahmebereich 20 abgewandten Seite des Spannkörpers 30 angeordnet und sind an dem Grundkörper 10 entlang der Längsachse 15 beweglich. Die erste Spanneinheit 40 und die zweite Spanneinheit 50 können aus einer Grundstellung B in eine Spannstellung A verstellt werden, wobei die Bewegung zwischen der Grundstellung B und der Spannstellung A stufenlos bzw. in beliebig infinitesimal kleinen Schritten erfolgen kann.

Die erste Spanneinheit 40 weist auf der der zweiten Seite 12 der Spannvorrichtung 1 zugewandten Seite eine erste Keilfläche 41 und eine zweite Keilfläche 42 auf, wobei die erste Keilfläche 41 und die zweite Keilfläche 42 zueinander parallel angeordnet sind. Die erste Keilfläche 41 ist auf der dem Spannkörper 30 zugewandten Seite angeordnet, währenddessen die zweite Keilfläche 42 auf der der zweiten Spanneinheit 50 zugewandten Seite der ersten Spanneinheit 40 angeordnet ist.

Die erste Keilfläche 41 ist dabei derart ausgebildet, dass diese in der Grundstellung B, siehe Figur 2a, beabstandet zu der Keilfläche 31 des Spannkörpers 30 angeordnet ist, und in der Spannstellung A, siehe Figur 2b, mit dieser in Wirkkontakt steht. Durch den Wirkkontakt zwischen den Keilflächen 31, 41 wird eine Spannkraft erzeugt, welche radial auf die Längsachse 15 gerichtet ist, und das Spannelement 35 in Richtung des Werkstückaufnahmebereichs 20 bzw. auf das Werkstück 3 zustellt.

Die erste Keilfläche 41 der ersten Spanneinheit 40 hat einen ersten Radius R3 und einen zweiten Radius R4, wobei sich die Keilfläche 41 zwischen dem ersten Radius R3 und dem zweiten Radius R4 erstreckt. Der Radius R3 ist kleiner als der Radius R4 und in der Grundstellung A entspricht der erste Radius R3 in etwa dem ersten Radius R1 des Spannkörpers 30 und der zweite Radius R4 der ersten Spanneinheit 40 in etwa dem zweiten Radius R2 des Spannkörpers 30, R3≥R1 und R4≥R2. Wesentlich ist jedoch, dass der erste Radius R3 der ersten Spanneinheit 40 kleiner ist als der zweite Radius R2 des Spannkörpers 30.

Die zweite Keilfläche 42 der ersten Spanneinheit 40 ist auf der der zweiten Spanneinheit 50 zugewandten Seite angeordnet und weist einen ersten Radius R5 und einen zweiten Radius R6 auf, wobei sich die Keilfläche 42 zwischen dem ersten Radius R5 und dem zweiten Radius R6 erstreckt. Der erste Radius R5 ist kleiner als der zweite Radius R6. Die erste Spanneinheit 40 ist somit auf der zweiten Seite 12 der Spannvorrichtung 1 kegelförmig ausgebildet, wobei der Kegel bevorzugt einen Öffnungswinkel von ca. 30° aufweist und die Kegelspitze auf der abgewandten Seite von der zweiten Seite 12 auf der Längsachse 15 angeordnet ist.

Die erste Spanneinheit 40 weist entlang der Längsachse 15 zwei Bereiche mit unterschiedlichen Wandstärken auf, wobei die Keilflächen 41, 42 in dem zweiten Bereich angeordnet sind, der eine dünnere Wandstärke aufweist als der erste Bereich.

Die zweite Keilfläche 42 der ersten Spanneinheit 40 auf der der zweiten Spanneinheit 50 zugewandten Seite ist eingerichtet, mit der Keilfläche 51 der zweiten Spanneinheit 50 zusammenzuwirken. Dementsprechend ist die Keilfläche 51 der zweiten Spanneinheit 50 ebenfalls im Bereich der zweiten Seite 12 der Spannvorrichtung 1 angeordnet.

Die Keilfläche 51 der zweiten Spanneinheit 50 steht radial in Richtung der Längsachse 15 von der zweiten Spanneinheit 50 ab und erstreckt sich zwischen einem ersten Radius R7 und einem zweiten Radius R8, wobei der erste Radius R7 kleiner ist als der zweite Radius R8. Weiterhin ist der erste Radius R7 der Keilfläche 51 kleiner als der zweite Radius R6 der Keilfläche 42 der zweiten Spanneinheit 40.

Die Keilfläche 51 der zweiten Spanneinheit 50 kann in einer Grundstellung B - wie in Figur 2a dargestellt ist - beabstandet zu der Keilfläche 42 der ersten Spanneinheit 40 sein und ist in der Spannstellung A in einer Wirkverbindung mit der ersten Spanneinheit 40, wodurch die zwischen der ersten Spanneinheit 40 und der zweiten Spanneinheit 50 erzeugte Spannkraft auf das Spannelement 35 bzw. deren Keilfläche 31 übertragen wird und eine Spannkraft für das auf der Spannfläche 36 angeordnete Werkstück 3 erzeugt wird, siehe Figur 2b.

Die Keilflächen 31, 41, 42, 51 weisen bevorzugt die gleiche Steigung auf bzw. die Keilflächen 31, 41, 42, 51 haben den gleichen Öffnungswinkel, wobei jede Keilfläche 31, 41, 42, 51 ein Ringsegment eines Kegels darstellt und die Kegelspitze des jeweiligen Kegels auf der Längsachse 15 auf der von der zweiten Seite 12 der Spannvorrichtung 1 abgewandten Seite angeordnet ist. Die jeweilige Keilflächen 31, 41, 42 und 51 sind in einem Winkel α = 15° zu der Längsachse 15 angeordnet.

Die erste Spanneinheit 40 die zweite Spanneinheit 50 sind koaxial zu der Längsachse 15 und benachbart zueinander angeordnet, wobei zwischen der ersten Spanneinheit 40 und der zweiten Spanneinheit 50 eine Lagerung vorgesehen ist, die eine möglichst reibungsarme Relativbewegung zwischen der ersten Spanneinheit 40 und der zweiten Spanneinheit 50 ermöglicht.

Figur 1 zeigt weiter, dass auf der von dem Werkstückaufnahmebereich 20 abgewandten Seite der zweiten Spanneinheit 50 der Grundkörper 10 angeordnet ist. Die zweite Spanneinheit 50 verkeilt die erste Spanneinheit 40 bzw. den Spannkörper 30 somit gegen den Grundkörper 10, wodurch eine Art Gegenlager für die Spannkraft bildet wird. Zwischen der zweiten Spanneinheit 50 und dem Grundkörper 10 ist ebenfalls die Lagerung angeordnet. Die Betätigung der ersten Spanneinheit 40 und der zweiten Spanneinheit 50 erfolgt durch ein (nicht dargestelltes) Betätigungsmittel, welches beispielsweise ein elektrohydraulischer, hydraulischer, elektrischer oder mechanischer Antrieb ist. Besonders bevorzugt ist, wenn die erste Spanneinheit 40 und die zweite Spanneinheit 50 durch jeweils eine Zugstange der Werkzeugmaschine 2 betätigbar sind.

Durch das Betätigungsmittel können die erste Spanneinheit 40 und die zweite Spanneinheit 50 zueinander relativ, aber auch relativ zu dem Spannkörper 30 aus der Grundstellung B in die Spannstellung A verschoben werden. Die Betätigungsmittel sind im dargestellten Ausführungsbeispiel eingerichtet, eine Zugkraft aufzubringen, um die jeweiligen Spanneinheiten 40, 50 aus der Grundstellung B in die Spannstellung A zu überführen. Die Zugkraft wirkt demnach von der zweiten Seite 12 in Richtung der ersten Seite 11 der Spannvorrichtung 1.

Die Spannelemente 35 werden beim Zustellen der ersten Spanneinheit 40 und der zweiten Spanneinheit 50 nicht ausschließlich radial verschoben, sondern die Spannelemente 35 folgen einer geringfügigen Schwenkbewegung bzw. Bogenbewegung, wodurch beim Verspannen des Werkstücks 3 ein Axialanzug erfolgt. Der Axialanzug kann beispielsweise zur exakten axialen Positionierung des Werkstücks in dem Werkstückaufnahmebereich 20 verwendet werden. Hierzu kann mindestens ein Werkstückanschlag in dem Werkstückaufnahmebereich 20 vorgesehen sein, durch den die axiale Position des Werkstücks 3 in dem Werkstückaufnahmebereich 20 in der Längsachse 15 der Spannvorrichtung 1 beim Einsetzen bzw. Verspannen des Werkstücks 3 vorgegeben wird. Ein Axialanzug drückt das Werkstück 3 beim Verspannen durch die Schwenkbewegung bzw. Bogenbewegung der Spannelemente 35 gegen den Werkstückanschlag<. Der Werkstückanschlag kann in Abhängigkeit von dem durchzuführenden Fertigungsverfahren entweder nach dem Verspannen des Werkstücks 3 aus dem Werkstückaufnahmebereich 20 entfernt werden oder für die Dauer der Bearbeitung des Werkstücks 3 an dieser Position verbleiben.

Das zweistufige Spannen des Werkstücks 3 mit der Spannvorrichtung 1 wird schrittweise anhand der Figuren 2a bis 2c erläutert. Zum Einsetzen des Werkstücks 3 in die Spannvorrichtung 1 befinden sich, wie in Figur 2a dargestellt, die erste Spanneinheit 40 und die zweite Spanneinheit 50 in der Grundstellung B. Das Werkstück 3 kann in den Werkstückaufnahmebereich 20 eingesetzt werden, wobei das Werkstück 3 bevorzugt ein ringförmiges Werkstück 3 ist, dessen beide Planflächen und sowie dessen innere Mantelfläche bearbeitet werden sollen. Als Hilfsmittel kann in dem Werkstückaufnahmebereich 20 der Werkstückanschlag angeordnet sein, durch den die exakte axiale Position in der Längsachse 15 des Werkstücks 3 beim Einsetzen in den Werkstückaufnahmebereich 20 vorgegeben wird.

Nach dem Einsetzen des Werkstücks 3 in den Werkstückaufnahmebereich 20 der Spannvorrichtung 1 werden, wie in Figur 2b dargestellt, die erste Spanneinheit 40 und die zweite Spanneinheit 50 aus der Grundstellung B in die Spannstellung A verfahren, wodurch der Spannkörper 30 derart verformt ist, dass die Spannelemente 35 in einer Schwenkbewegung bzw. Bogenbewegung auf das Werkstück 3 zugestellt wird und das Werkstück 3 eingespannt wird. Diese Spannbewegung ist in Figur 2b mittels einer gestrichelten Pfeillinie dargestellt. Die Schwenkbewegung besteht aus einer radialen Bewegung mit einer überlagerten axialen Bewegung, wobei die radiale Bewegung der Einspannung des Werkstücks 3 dient und die axiale Bewegung dem Axialanzug des Werkstücks 3.

Wie Figur 2b weiter zu entnehmen ist, wird der Spannkörper 30 in dem mittleren Bereich 32 elastisch verformt und die Keilflächen 31, 41, 42 und 51 stehen nun in Wirkkontakt. Die Spannkraft, die durch die Keilflächen 31, 41, 42 und 51 erzeugt wird, kann durch die axiale Position der Keilflächen 31, 41, 42 und 51 präzise eingestellt werden, wobei die Spannkraft durch ein weiteres Zustellen in Richtung der Spannstellung A erhöht werden kann.

In der ersten Spannstufe gemäß Figur 2b befinden sich die erste Spanneinheit 40 und die zweite Spanneinheit 50 in der Spannstellung A und eine grobe Vorbearbeitung des Werkstücks 3 kann erfolgen. Beispielsweise können in der ersten Spannstufe die beiden Planflächen 4 und 5 sowie die innere Mantelfläche 6 des Werkstücks 3 mit einer großen Spankraft geschruppt werden. Nach der groben Vorbearbeitung des Werkstücks 3 kann die Spannvorrichtung 1 in die zweite Spannstufe gestellt werden. Die zweite Spannstufe erlaubt dem Werkstück 3 freigewordene Spannungen durch eine Verformung abzubauen und/oder Form- und Lagefehler, insbesondere Rundheitsfehler des Außen- oder Innendurchmessers auszugleichen. In der zweiten Spannstufe ist die Spannkraft deutlich reduziert, und die Verformungen und/oder die Rundheitsfehler des Werkstücks 3 können durch eine elastische Verformung des Spannkörpers 30 aufgenommen werden. Die zweite Spannstufe ist in Figur 2c wiedergegeben und es ist ersichtlich, dass in der zweiten Spannstufe die zweite Spanneinheit 50 aus der Spannstellung A zurück in die Grundstellung B verfahren ist. Die Spannkraft wird in der zweiten Spannstufe ausschließlich durch das Zusammenwirken der Keilfläche 31 des Spannkörpers 30 und der Keilfläche 41 der ersten Spanneinheit 40 aufgebracht. In der zweiten Spannstufe kann die Feinbearbeitung bzw. die Endbearbeitung der Oberflächen des Werkstücks 3 erfolgen, beispielsweise durch Schleifen oder Schlichten.

Nach dem Bearbeiten des Werkstücks 3 in der zweiten Spannstufe wird die erste Spanneinheit 40 aus der Spannstellung A zurück in die Grundstellung B bewegt, wodurch das Werkstück 3 in dem Werkstückaufnahmebereich 20 freigegeben wird und aus der Spannvorrichtung 1 entnommen werden kann.

Alternativ zu dem in Figur 1 dargestellten Ausführungsbeispiel kann die Spannvorrichtung 1 zur Innenspannung eines ringförmigen Werkstücks 3 ausgebildet sein.

Eine solche Spannvorrichtung 1 zur Innenspannung umfasst analog zu dem ersten erfindungsgemäßen Ausführungsbeispiel gemäß der Figur 1 ebenfalls die wesentlichen Bestandteile, nämlich einen Spannkörper 30, eine erste Spanneinheit 40 und eine zweite Spanneinheit 50. Der Werkstückaufnahmebereich 20 umgibt radial den Spannkörper 30, so dass die erste Spanneinheit 40 und die zweite Spanneinheit 50 radial innerhalb des Spannkörpers 30 angeordnet sind. Bei einer Betätigung der ersten und/oder der zweiten Spanneinheit 40, 50 durch das (nicht dargestellte) Betätigungsmittel, werden die Spannelemente 35 des Spannkörpers 30 radial nach außen bewegt, wodurch das ringförmige Werkstück 3 auf der inneren Mantelfläche 6 gespannt wird. Das Werkstück 3 kann in einer solchen Spannung mittels der Spannvorrichtung 1 zur Innenspannung des Werkstücks 3 an den beiden Planflächen 4 und 5 und an der äußeren Mantelfläche 7 bearbeitet werden.

Somit wird erfindungsgemäß eine zweistufige Spannvorrichtung 1 bereitgestellt, die ein mehrstufiges Spannen eines Werkstückes 3 ermöglicht, ohne dass das Werkstück 3 aus der Spannvorrichtung 1 entnommen werden muss. Die Spannvorrichtung 1 kann in der zweiten Spannstufe frei gewordene Spannungen aufnehmen und Verformungen des Werkstücks zum Abbau der inneren Spannungen zulassen, wodurch ein Höchstmaß an Präzision bei dem zu bearbeitenden Werkstück 3 realisiert ist, ohne dass das Werkstück 3 zwischen zwei Spannungen aus der Spannvorrichtung 1 entnommen werden muss, wodurch eine besonders zeiteffiziente Fertigung mit kurzen Stand- und Taktzeiten realisiert wird.

### Bezugszeichenliste

- 1: Spannvorrichtung
- 2: Werkzeugmaschine
- 3: Werkstück
- 10: Grundkörper
- 11: erste Seite
- 12: zweite Seite
- 15: Längsachse
- 20: Werkstückaufnahmebereich
- 21: Ausnehmung
- 30: Spannkörper
- 31: Keilfläche
- 32: mittlerer Bereich
- 33: endseitiger Bereich
- 34: Axialschlitze
- 35: Spannelement
- 36: Spannfläche
- 37: Anformung
- 40: erste Spanneinheit
- 41: innere Keilfläche
- 42: äußere Keilfläche
- 50: zweite Spanneinheit
- 51: Keilfläche

## Patentansprüche

1. Spannvorrichtung (1) mit einer Längsachse (15), einer ersten Seite (11), einer zweiten Seite (12) und einem Werkstückaufnahmebereich (20) aufweisend:
- einen elastischen Spannkörper (30) mit wenigstens einem Spannelement (35),
- eine erste Spanneinheit (40) und mindestens eine zweite Spanneinheit (50),
- wobei der Spannkörper (30) auf der dem Werkstückaufnahmebereich (20) zugewandten Seite angeordnet ist und zwischen dem Spannkörper (30) und der mindestens einen zweiten Spanneinheit (50) die erste Spanneinheit (40) angeordnet ist, und
- wobei zwischen dem Spannkörper (30) und der ersten Spanneinheit (40) und der ersten Spanneinheit (40) und der mindestens einen zweiten Spanneinheit (50) jeweils wenigstens eine Keilfläche (31, 41, 42, 51) angeordnet ist, die in der Spannstellung (A) durch einen Wirkkontakt eine Spannkraft auf das wenigstens eine Spannelement (35) aufbringt,
**dadurch gekennzeichnet, dass** die Spannvorrichtung (1) eine Spannvorrichtung (1) zum mindestens zweistufigen Spannen eines Werkstücks (3) ist, bei der die erste Spanneinheit (40) und die mindestens eine zweite Spanneinheit (50) entlang der Längsachse (15) zwischen einer Spannstellung (A) und einer Grundstellung (B) zustellbar sind, wobei eine erste Spannstufe dadurch realisiert ist, dass sich die erste Spanneinheit und die wenigstens eine zweite Spanneinheit in der Spannstellung befinden und wobei sich in der zweiten Spannstufe die erste Spanneinheit in der Spannstellung befindet und die mindestens eine zweite Spanneinheit in der Grundstellung steht, wodurch in der zweiten Spannstufe eine weichere Spannung des Werkstücks in der Spannvorrichtung erreicht ist.

2. Spannvorrichtung (1) nach Anspruch 1,
**dadurch gekennzeichnet, dass** der Spannkörper (30), die erste Spanneinheit (40) und die mindestens eine zweite Spanneinheit (50) koaxial zu der Längsachse (15) ausgerichtet sind.

3. Spannvorrichtung (1) nach Anspruch 1 oder 2,
**dadurch gekennzeichnet, dass** der Spannkörper (30) auf der dem Werkstückaufnahmebereich (20) zugewandten Seite mindestens eine Spannfläche (36) aufweist.

4. Spannvorrichtung (1) nach Anspruch 3,
**dadurch gekennzeichnet, dass** die Spannfläche (36) aus einer in den Werkstückaufnahmebereich (20) ragenden Anformung (37) gebildet ist und dass die Anformung (37) keil- oder kuppelförmig ausgebildet ist.

5. Spannvorrichtung (1) nach einem der vorgenannten Ansprüche,
**dadurch gekennzeichnet, dass** der Spannkörper (30) im Umfang mindestens zwei Axialschlitze (34) umfasst, und dass zwischen zwei Axialschlitzen (34) jeweils ein Spannelement (35) gebildet ist.

6. Spannvorrichtung (1) nach Anspruch 5,
**dadurch gekennzeichnet, dass** die Axialschlitze (34) zwischen der ersten Seite (11) und der zweiten Seite (12) angeordnet sind.

7. Spannvorrichtung (1) nach Anspruch 5,
**dadurch gekennzeichnet, dass** die Axialschlitze (34) auf der zweiten Seite (12) angeordnet sind und dass die Axialschlitze (34) auf der zweiten Seite des Spannkörpers (30) ein offenes Ende aufweisen.

8. Spannvorrichtung (1) nach einem der vorgenannten Ansprüche,
**dadurch gekennzeichnet, dass** der Spannkörper (30) auf der von dem Werkstückaufnahmebereich (20) abgewandten Seite die Keilfläche (31) aufweist.

9. Spannvorrichtung (1) nach einem der vorgenannten Ansprüche,
**dadurch gekennzeichnet, dass** die erste Spanneinheit (40) bereichsweise konisch ausgebildet ist, und dass der konische Bereich der ersten Spanneinheit (40) eine erste und eine zweite Keilfläche (41, 42) bildet.

10. Spannvorrichtung (1) nach einem der vorgenannten Ansprüche,
**dadurch gekennzeichnet, dass** die mindestens eine zweite Spanneinheit (50) eine zweite Keilfläche (51) aufweist, die auf der der ersten Spanneinheit (40) zugewandten Seite der zweiten Spanneinheit (50) angeordnet ist.

11. Spannvorrichtung (1) nach einem der vorgenannten Ansprüche,
**dadurch gekennzeichnet, dass** die Keilflächen (31, 41, 42, 51) in der Spannstellung (A) in einer Ebene senkrecht zur Längsachse (15) mit das wenigstens eine Spannelement (35) liegen.

12. Spannvorrichtung (1) nach einem der vorgenannten Ansprüche,
**dadurch gekennzeichnet, dass** die Spannkraft im Wesentlichen senkrecht zu der Längsachse (15) ausgerichtet ist.

13. Spannvorrichtung (1) nach einem der vorgenannten Ansprüche,
**dadurch gekennzeichnet, dass** die Keilflächen (31, 41, 42, 51) in einem Winkel (α) von 60°> α >0° zu der Längsachse (15) angeordnet sind.

14. Spannvorrichtung (1) nach einem der vorgenannten Ansprüche,
**dadurch gekennzeichnet, dass** der Spannkörper (30), die erste Spanneinheit (40) und die zweite Spanneinheit (50) einen korrespondierenden Querschnitt aufweisen und dass der jeweilige Querschnitt kreisförmig, mehreckig, elliptisch oder dergleichen ist.

15. Spannvorrichtung (1) nach einem der vorgenannten Ansprüche,
**dadurch gekennzeichnet, dass** die Spannvorrichtung (1) für eine Außenspannung eines Werkstücks (3) ausgebildet ist und/oder dass die Spannvorrichtung (1) für eine Innenspannung eines Werkstücks (3) ausgebildet ist.

16. Spannvorrichtung (1) nach einem der vorgenannten Ansprüche,
**dadurch gekennzeichnet, dass** die erste Spanneinheit (40) und dass die mindestens eine zweite Spanneinheit (50) elektrisch, elektrohydraulisch, hydraulisch, pneumatisch oder mechanisch in der Längsachse (15) zustellbar ist bzw. sind.

17. Spannvorrichtung (1) nach einem der vorgenannten Ansprüche,
**dadurch gekennzeichnet, dass** die mindestens eine zweite Spanneinheit (50) eine größere Steifigkeit aufweist als die erste Spanneinheit (40) .

18. Werkzeugmaschine (2) mit einer Spannvorrichtung (1) nach einem der vorgenannten Ansprüche.

19. Verfahren zum mindestens zweistufigen Spannen eines Werkstücks (3) mit einer Spannvorrichtung (1) nach einem der Ansprüche 1 bis 17, **gekennzeichnet durch** die Verfahrensschritte:
- Einsetzen des Werkstücks (3) in den Werkstückaufnahmebereich (20),
- Verspannen des Werkstücks (3) durch ein Verstellen der ersten Spanneinheit (40) und der mindestens einen zweiten Spanneinheit (50) aus der Grundstellung (B) in die Spannstellung (A),
- Bearbeiten des Werkstücks (3),
- Verstellen der mindestens einen zweiten Spanneinheit (50) aus der Spannstellung (A) in eine Grundstellung (B),
- Bearbeiten des Werkstücks (3), und
- Ausspannen durch Verstellen der ersten Spanneinheit (40) aus der Spannstellung (A) in die Grundstellung (B).

## Claims

1. Clamping device (1) having a longitudinal axis (15), a first side (11), a second side (12) and a work piece reception region (20), comprising:
- an elastic clamping body (30) with at least one clamping element (35),
- a first clamping unit (40) and at least one second clamping unit (50),
- wherein the clamping body (30) is arranged on the side facing the work piece reception region (20) and the first clamping unit (40) is arranged between the clamping body (30) and the at least one second clamping unit (50), and
- wherein, between each of the clamping body (30) and the first clamping unit (40), and the first clamping unit (40) and the at least one second clamping unit (50), at least one wedge surface (31, 41, 42, 51) is arranged which, in the clamped position (A), exerts, by means of an operative contact, a clamping force onto the at least one clamping element (35),
**characterized in that** the clamping device (1) is a clamping device (1) for the at least two-stage clamping of a work piece (3), in which the first clamping unit (40) and the at least one second clamping unit (50) are adjustable along the longitudinal axis (15) between a clamped position (A) and an initial position (B), wherein a first clamping stage is realized when the first clamping unit and the at least one second clamping unit are in the clamped position and wherein, in the second clamping stage, the first clamping unit is in the clamped position and the at least one second clamping unit is in the initial position, whereby a softer clamping of the work piece in the clamping device is achieved in the second clamping stage.

2. Clamping device (1) in accordance with claim 1,
**characterized in that**
the clamping body (30), the first clamping unit (40) and the at least one second clamping unit (50) are aligned coaxially to the longitudinal axis (15).

3. Clamping device (1) in accordance with claim 1 or 2,
**characterized in that**
the clamping body (30) comprises at least one clamping surface (36) on the side facing the work piece reception region (20).

4. Clamping device (1) in accordance with claim 3,
**characterized in that**
the clamping surface (36) is formed from a shaped piece (37) which extends into the work piece reception region (20) and **in that** the shaped piece (37) is implemented in a wedge-like or dome-like shape.

5. Clamping device (1) in accordance with any of the preceding claims,
**characterized in that**
the clamping body (30) comprises, in its perimeter, at least two axial slots (34), and **in that** a clamping element is formed between each of two axial slots (34).

6. Clamping device (1) in accordance with claim 5,
**characterized in that**
the axial slots (34) are arranged between the first side (11) and the second side (12).

7. Clamping device (1) in accordance with claim 5,
**characterized in that**
the axial slots (34) are arranged on the second side (12) and **in that** the axial slots (34) comprise, on the second side of the clamping body (30), an open end.

8. Clamping device (1) in accordance with any of the preceding claims,
**characterized in that**
the clamping body (30) comprises the wedge surface (31) on the side facing away from the work piece reception region (20).

9. Clamping device (1) in accordance with any of the preceding claims,
**characterized in that**
the first clamping unit (40) is partially implemented conically, and **in that** the conical region of the first clamping unit (40) forms a first and a second wedge surface (41, 42).

10. Clamping device (1) in accordance with any of the preceding claims,
**characterized in that**
the at least one second clamping unit (50) comprises a second wedge surface (51) which is arranged on the side of the second clamping unit (50) that faces the first clamping unit (40).

11. Clamping device (1) in accordance with any of the preceding claims,
**characterized in that**
the wedge surfaces (31, 41, 42, 51) lie, when in the clamped position (A), in a plane which is horizontal to the longitudinal axis (15) with the at least one clamping element (35).

12. Clamping device (1) in accordance with any of the preceding claims,
**characterized in that**
the clamping force is directed essentially vertically to the longitudinal axis (15).

13. Clamping device (1) in accordance with any of the preceding claims,
**characterized in that**
the wedge surfaces (31, 41, 42, 51) are arranged at an angle (α) of 60° > α > 0° to the longitudinal axis (15).

14. Clamping device (1) in accordance with any of the preceding claims,
**characterized in that**
the clamping body (30), the first clamping unit (40) and the second clamping unit (50) comprise a corresponding cross section, and **in that** each of the cross sections is circle-shaped, polygonal, elliptic or similar.

15. Clamping device (1) in accordance with any of the preceding claims,
**characterized in that**
the clamping device (1) is configured for the external clamping of a work piece (3) and/or **in that** the clamping device (1) is configured for the internal clamping of a work piece (3).

16. Clamping device (1) in accordance with any of the preceding claims,
**characterized in that**
the first clamping unit (40) and the at least one second clamping unit (50) can be electrically, pneumatically or mechanically adjusted along the longitudinal axis (15).

17. Clamping device (1) in accordance with any of the preceding claims,
**characterized in that**
the at least one second clamping unit (50) exhibits a greater degree of stiffness than the first clamping unit (40).

18. Machine tool (2) having a clamping device (1) in accordance with any of the preceding claims.

19. Method for the at least two-stage clamping of a work piece (3), with a clamping device (1) in accordance with any of claims 1 to 17, **characterized by** the following method steps:
- Inserting the work piece (3) into the work piece reception region (20),
- Clamping the work piece (3) by adjusting the first clamping unit (40) and the at least one second clamping element (50) from the initial position (B) to the clamped position (A),
- Machining the work piece (3),
- Adjusting the at least one second clamping unit (50) from the clamped position (A) to an initial position (B),
- Machining the work piece (3), and
- Unclamping by adjusting the first clamping unit (40) from the clamped position (A) to the initial position (B).

## Revendications

1. Dispositif de serrage (1) ayant un axe longitudinal (15), un premier côté (11), un second côté (12) et une zone de réception de pièce à usiner (20) comprenant :
- un organe de serrage élastique (30) ayant au moins un élément de serrage (35),
- une première unité de serrage (40) et au moins une seconde unité de serrage (50),
- l'organe de serrage (30) étant sur le côté tourné vers la zone de réception de pièce à usiner (20) et la première unité de serrage (40) est entre l'organe de serrage (30) et au moins la seconde unité de serrage (50), et
- au moins une surface de coin (31, 41, 42, 51) respective est prévue entre l'organe de serrage (30) et la première unité de serrage (40) ainsi qu'entre la première unité de serrage (40) et au moins la seconde unité de serrage (50), cette surface de coin exerçant en position de serrage (A) une force de serrage sur au moins un élément de serrage (35) par un contact actif, dispositif de serrage (1) **caractérisé en ce qu'**il est
un dispositif de serrage (1) pour le serrage au moins en deux étapes d'une pièce à usiner (3), dans laquelle la première unité de serrage (40) et au moins la seconde unité de serrage (50) se déplacent selon l'axe longitudinal (15) entre une position de serrage (A) et une position de base (B),
- la première étape de serrage étant réalisée **en ce que** la première unité de serrage et au moins une seconde unité de serrage se trouvent en position de serrage, et
- dans la seconde étape de serrage, la première unité de serrage est en position de serrage et au moins la seconde unité de serrage est en position de base de sorte que dans la seconde étape de serrage, on a un serrage réduit de la pièce à usiner dans le dispositif de serrage.

2. Dispositif de serrage (1) selon la revendication 1,
**caractérisé en ce que**
l'organe de serrage (30), la première unité de serrage (40) et au moins la seconde unité de serrage (50) sont orientées co-axialement selon l'axe longitudinal (15).

3. Dispositif de serrage (1) selon la revendication 1 ou 2,
**caractérisé en ce que**
sur le côté tourné vers la zone de réception de pièce à usiner (20), l'organe de serrage (30) a au moins une surface de serrage (36).

4. Dispositif de serrage (1) selon la revendication 3,
**caractérisé en ce que**
la surface de serrage (36) est réalisée par une mise en forme (37) de la zone de réception (20), et
cette mise en forme (37) est en forme de coin ou de coupelle.

5. Dispositif de serrage (1) selon l'une des revendications précédentes,
**caractérisé en ce qu'**
en périphérie, l'organe de serrage (30) a au moins deux fentes axiales (34), et un élément de serrage (35) est formé respectivement entre deux fentes axiales (34).

6. Dispositif de serrage (1) selon la revendication 5,
**caractérisé en ce que**
les fentes axiales (34) sont entre le premier côté (11) et le second côté (12).

7. Dispositif de serrage (1) selon la revendication 5,
**caractérisé en ce que**
les fentes axiales (34) sont sur le second côté (12), et
les fentes axiales (34) ont une extrémité ouverte sur le second côté de l'organe de serrage (30).

8. Dispositif de serrage (1) selon l'une des revendications précédentes,
**caractérisé en ce que**
l'organe de serrage (30) présente la surface de coin (31) sur le côté opposé à la zone de réception de pièce à usiner (20).

9. Dispositif de serrage (1) selon l'une des revendications précédentes,
**caractérisé en ce que**
la première unité de serrage (40) a par zone une forme conique, et
la zone conique de la première unité de serrage (40) forme une première et une seconde surface de coin (41, 42).

10. Dispositif de serrage (1) selon l'une des revendications précédentes,
**caractérisé en ce que**
au moins la seconde unité de serrage (50) a une seconde surface de coin (51) sur le côté de la seconde unité de serrage (50) tourné vers la première unité de serrage (40).

11. Dispositif de serrage (1) selon l'une des revendications précédentes,
**caractérisé en ce qu'**
en position de serrage (A), les surfaces de coin (31, 41, 42, 51) sont dans un plan perpendiculaire à l'axe longitudinal (15) avec au moins un élément de serrage (35).

12. Dispositif de serrage (1) selon l'une des revendications précédentes,
**caractérisé en ce que**
la force de serrage s'exerce pratiquement perpendiculairement à l'axe longitudinal (15).

13. Dispositif de serrage (1) selon l'une des revendications précédentes,
**caractérisé en ce que**
les surface de coin (31, 41, 42, 51) font un angle (α) tel que 60°>α>0° par rapport à l'axe longitudinal (15).

14. Dispositif de serrage (1) selon l'une des revendications précédentes,
**caractérisé en ce que**
l'organe de serrage (30), la première unité de serrage (40) et la seconde unité de serrage (50) ont une section correspondante, et
la section respective est de forme circulaire, de forme polygonale, de forme elliptique ou analogue.

15. Dispositif de serrage (1) selon l'une des revendications précédentes,
**caractérisé en ce que**
le dispositif de serrage (1) est réalisé pour serrer par l'extérieur une pièce à usiner (3), et/ou
le dispositif de serrage (1) est réalisé pour serrer par l'intérieur une pièce à usiner (3).

16. Dispositif de serrage (1) selon l'une des revendications précédentes,
**caractérisé en ce que**
la première unité de serrage (40) et au moins la seconde unité de serrage (50) sont réglables électriquement, électrohydrauliquement, hydrauliquement, pneumatiquement ou mécaniquement selon l'axe longitudinal (15).

17. Dispositif de serrage (1) selon l'une des revendications précédentes,
**caractérisé en ce qu'**
au moins la seconde unité de serrage (50) a une rigidité supérieure à celle de la première unité de serrage (40).

18. Machine-outil (2) comportant un dispositif de serrage (1) selon l'une des revendications précédentes.

19. Procédé de serrage à au moins deux étapes d'une pièce à usiner (3) avec un dispositif de serrage (1) selon l'une des revendications 1 à 17, **caractérisé par** les étapes de procédés consistant à :
- mettre en place la pièce à usiner (3) dans la zone de réception de pièce (20),
- serrer la pièce à usiner (3) par le déplacement de la première unité de serrage (40) et au moins d'une seconde unité de serrage (50) à partir de la position de base (B) vers la position de serrage (A),
- usiner la pièce (3),
- déplacer au moins la seconde unité de serrage (50) à partir de la position de serrage (A) dans la position de base (B),
- usiner la pièce (3), et
- desserrer par le réglage de la première unité de serrage (40) à partir de la position de serrage (A) dans la position de base (B).
